# EUROPÄISCHE PATENTSCHRIFT

(11) **EP 0 864 777 B1**
(45) Veröffentlichungstag und Bekanntmachung des Hinweises auf die Patenterteilung: **30.01.2002**
(21) Anmeldenummer: 98102589.3
(22) Anmeldetag: 14.02.1998
(51) Int. Cl.: F16H 25/06, F02B 67/04

(54) **Aggregateantrieb mit einer innenachsigen Zahnradmaschine als Untersetzungsgetriebe, insbesondere bei Brennkraftmaschinen**
Auxiliary drive unit in particular for combustion engines using speed reducer with internal gear pairs
Entraînement d'aggrégats en particulier pour des machines à combustion interne avec réducteur de vitesses à engrenages intérieurs

(30) Priorität: 10.03.1997 DE 19709817
(43) Veröffentlichungstag der Anmeldung: 16.09.1998
(73) Patentinhaber: Bayerische Motoren Werke Aktiengesellschaft, 80788 München (DE)
(72) Erfinder: Klostermeier, Heinrich, 83104 Hohenthann (DE)

(56) Entgegenhaltungen:
- EP-A- 0 599 125
- FR-A- 2 312 401
- US-A- 3 602 070

## Beschreibung

Die Erfindung betrifft einen Aggregateantrieb mit einer innenachsigen Zahnradmaschine als Untersetzungsgetriebe, insbesondere bei Brennkraftmaschinen, gemäß der US-A-3 602 070.

Eine andersartige Anordnung ist aus der DE-C 25 50 501 zum Antrieb eines Zündverteilers bekannt, dessen Ritzel mit einem am Außenumfang des Außenrotors angeordneten Getrieberad kämmt.

Eine weitere Verwendung einer innenachsigen Zahnradmaschine als Untersetzungsgetriebe für einen Ventiltrieb zeigt und beschreibt die DE-C 35 29 965 mit einer einstufigen Zahnradmaschine, deren Außenrotor durch angeformte Nocken als Nockentrommel zur Betätigung von Ventil-Stößelstangen dient. Diese Zahnradmaschine ist so ausgelegt, daß der für den Ventiltrieb wirksame Außenrotor mit der erforderlichen halben Maschinendrehzahl dreht im Gegensatz zu dem Außenrotor der Zahnradmaschine des ersten Beispiels, der aufgrund der gewählten Zähnezahlen von Innenrotor und Außenrotor lediglich eine Teiluntersetzung in der für den Zündverteiler ebenfalls halben Maschinendrehzahl bewirkt.

Die erforderliche Reduzierung der Maschinendrehzahl bei Brennkraftmaschinen für deren Aggregate erfordert insbesondere bei Brennkraftmaschinen mit kleinem Einbauraum zur Erzielung der erforderlichen Untersetzung aufwendige Untersetzungsgetriebe, um insbesondere im Durchmesser relativ kleine Getrieberäder in konturbestimmenden Bereichen der Brennkraftmaschine zu erzielen. Ein Beispiel hierfür ist der in Figur 2 der US 5 231 961 gezeigte Antrieb von obenliegenden Nockenwellen eines V-Motors, der im übrigen mit einer gesondert angetriebenen innenachsigen Pumpe ausgerüstet ist. Zur Erzielung von im Durchmesser relativ kleinen Nockenwellenrädem zur Erzielung schmalbauender Zylinderköpfe sind im Bereich des Maschinengehäuses Untersetzungsgetriebe mit relativ großen Getrieberädern erforderlich. Der Gewichts- und Bauaufwand sowie der Platzbedarf in Maschinenlängsrichtung sind nicht unerheblich.

Der Erfindung liegt die Aufgabe zugrunde, einen gattungsgemäßen Aggregateantrieb derart weiterzubilden, daß die Gesamtuntersetzung i_{ges} = 0,5 bzw. 1:2 mit einem geringeren Aufwand erzielt ist.

Diese Aufgabe ist mit dem Patentanspruch gelöst.

Der Vorteil der Erfindung ist in der Kombination eines zur Drehachse der Antriebswelle koaxial angeordneten Außenrotors mit einem koaxial zur Antriebswelle mit dem Außenrotor drehfest verbundenen Getrieberades zu sehen, wobei mit der axial versetzten Anordnung des Getrieberades dieses für eine wirksame Teiluntersetzung entsprechend klein gestaltet werden kann.

Eine baulich vorteilhafte Ausbildung ist dadurch erreicht, daß der Außenrotor einen wellennahen Kragen aufweist als Träger des Getrieberades, wobei eine im Kragen angeordnete Lagereinrichtung einer Zentrierung von Außenrotor und Getrieberad auf der Antriebswelle dient. Mit dieser erfindungsgemäßen Ausgestaltung der gemeinsam auf einer Antriebswelle zentrierten Teile des Untersetzungsgetriebes ist der Außenrotor in seinen mechanischen Belastungen erheblich reduziert.

Zur Erzielung eines vorteilhaft kleinbauenden Aggregateantriebes ist in weiterer Ausgestaltung eine zweistufige, per se beispielsweise aus der DE-C 35 20 884 bekannte Zahnradmaschine vorgesehen mit einem innen wie außen jeweils sieben Zähne aufweisenden Zwischenrotor, der einerseits mit einem sechs Zähne aufweisenden Innenrotor und andererseits mit einem acht Zähne aufweisenden Außenrotor für eine Teiluntersetzung i = 0,75 bzw. 3/4 zusammenwirkt. Diese erfindungsgemäße Ausgestaltung ergibt ein zur Drehachse der Antriebswelle langsamer drehendes Getrieberad und somit ein kompaktbauendes Untersetzungsgetriebe.

In weiterer Ausgestaltung ist dieses Getrieberad im weiteren Aggregateantrieb für eine Teiluntersetzung von i = 2/3 gewählt , die mit der Teiluntersetzung i = 3/4 der Zahnradmaschine eine Gesamtuntersetzung i_{ges} = 0,5 ergibt.

Mit der vorbeschriebenen Erfindung ist ein in axialer Richtung kurzbauendes Untersetzungsgetriebe zur Halbierung einer Maschinendrehzahl erreicht.

Eine weitere Möglichkeit dieses Ziel zu erreichen ist erfindungsgemäß dadurch gegeben, daß eine zweistufige Zahnradmaschine vorgesehen ist mit einem innen wie außen jeweils sieben Zähne aufweisenden Zwischenrotor, der einerseits mit einem sechs Zähne aufweisenden Innenrotor und andererseits mit einem zwölf Zähne aufweisenden Außenrotor für eine Teiluntersetzung von i = 0,5 zusammenwirkt, wobei die mit dem Getrieberad gewählte Teiluntersetzung i = 1 sein kann für eine Gesamtuntersetzung i_{ges} = 0,5 bzw. 1:2.

Für eine vorteilhafte Verwendung des erfindungsgemäßen Aggregateantriebes dient als Antriebswelle des Innenrotors der Zahnradmaschine eine Kurbelwelle der Brennkraftmaschine, wobei die Zahnradmaschine für den Antrieb zweier obenliegend angeordneter Nockenwellen vorgesehen ist. Diese Anordnung ist insbesondere für eng benachbarte Nockenwellen vorteilhaft, bei denen Antriebsräder von üblicher Auslegung sich überdecken würden.

Der erfindungsgemäße Aggregateantrieb ist auch für andere Hilfs- und Neben-Aggregate anwendbar, deren Antriebszahlen gegenüber der Maschinendrehzahl reduziert sind, wie beispielsweise eine Einspritzpumpe.

Die Erfindung ist anhand eines in der Zeichnung schematisch dargestellten Aggregateantriebes beschrieben. Es zeigt
- Figur 1: eine mehrstufige Zahnradmaschine im Querschnitt,
- Figur 2: die mehrstufige Zahnradmaschine gemäß der Linie 2/2 in Figur 1 im Längsschnitt, und
- Figur 3: einen Nockenwellen-Antrieb mit verkleinerten Nockenwellen-Antriebsrädern.

Ein Aggregateantrieb 1 für eine nicht näher dargestellte Brennkraftmaschine 2 weist als Untersetzungsgetriebe eine innenachsige Zahnradmaschine 3 auf, wobei ein Außenrotor 4 der Zahnradmaschine 3 mit einem einer Gesamtuntersetzung des Aggregateantriebes 1 dienenden Getrieberad 5 in drehfester Verbindung steht.

Zur Erzielung eines kleinbauenden Untersetzungsgetriebes mit einer für die Brennkraftmaschine bevorzugten Untersetzung i = 0,5 ist eine mehrstufige Zahnradmaschine 3 vorgesehen mit einem zur Drehachse 6 einer Antriebswelle 7 eines Innenrotors 8 koaxialen Außenrotor 4, der über eine freie Stimseite 9 mit dem auf einem relativ kleinstmöglichen Teilkreisdurchmesser ausgelegten Getrieberad 5 drehfest verbunden ist.

Für eine axial kurzbauende Ausgestaltung weist der Außenrotor 4 einen wellennahen Kragen 10 auf als Träger des Getrieberades 5, wobei eine im Kragen 10 angeordnete Lagereinrichtung 11, z.B. Nadellager 11', einer Zentrierung von Außenrotor 4 und Getrieberad 5 auf der Antriebswelle 7 dient. Mit dieser erfindungsgemäßen Zentrierung von Außenrotor 4 und Getrieberad 5 über die Lagereinrichtung 11 auf der Antriebswelle 7 sind beispielsweise aus einem Kettentrieb des Aggregateantriebes 1 herrührende Schläge nicht vom Außenrotor 4 aufzunehmen.

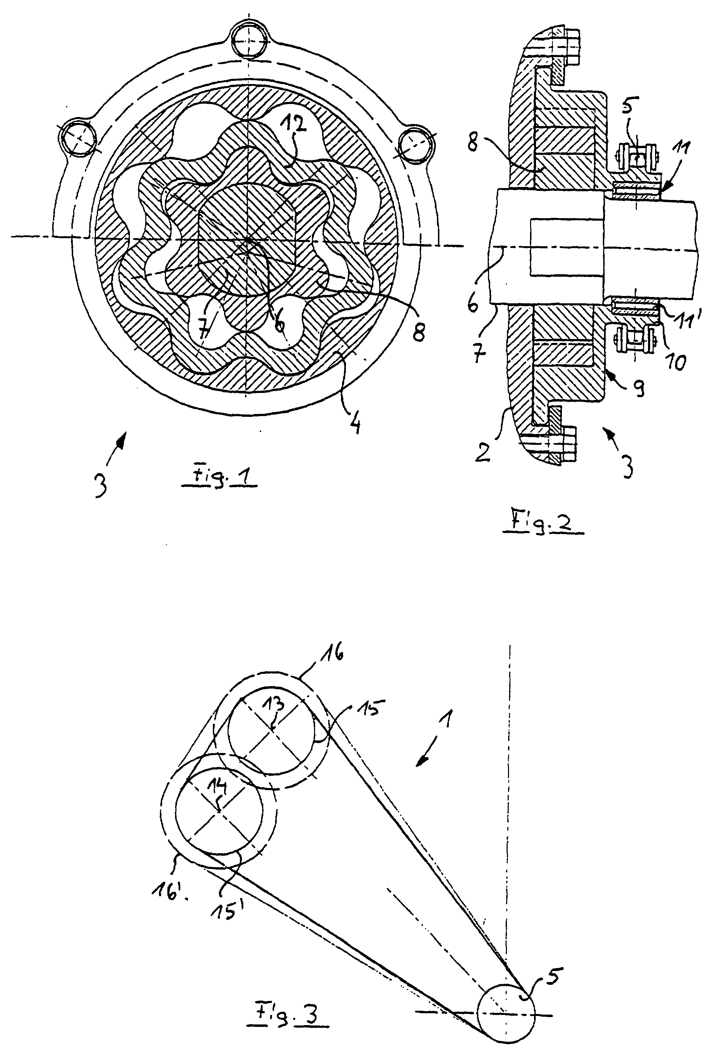

Wie aus Figur 1 ersichtlich, ist eine zweistufige Zahnradmaschine 3 vorgesehen mit einem innen wie außen jeweils sieben Zähne aufweisenden Zwischenrotor 12, der einerseits mit einem sechs Zähne aufweisenden Innenrotor 8 und andererseits mit einem acht Zähne aufweisenden Außenrotor 4 für eine Teiluntersetzung von i = 0,75 bzw. 3/4 zusammenwirkt. In Verbindung damit ist mit dem Getrieberad 5 im weiteren Aggregateantrieb 1 eine Teiluntersetzung von i = 2/3 gewählt, so daß das Produkt dieser Teiluntersetzung mit der Teiluntersetzung i = 3/4 der Zahnradmaschine 3 eine Gesamtuntersetzung i_{ges} = 0,5 ergibt.

Diese Halbierung der Antriebsdrehzahl ist gemäß einem nicht dargestellten weiteren Ausführungsbeispiel auch dadurch erreicht, daß eine zweistufige Zahnradmaschine vorgesehen ist mit einem innen wie außen jeweils sieben Zähne aufweisenden Zwischenrotor, der einerseits mit einem sechs Zähne aufweisenden Innenrotor und andererseits mit einem zwölf Zähne aufweisenden Außenrotor für eine Teiluntersetzung von i = 0,5 zusammenwirkt, wobei die mit dem Getrieberad 5 gewählte Teiluntersetzung i = 1 sein kann für ein i_{ges} = 0,5 bzw. 1:2.

Für eine bevorzugte Anwendung des Aggreggateantriebes 1 an einer Brennkraftmaschine 2 dient als Antriebswelle 7 des Innenrotors 8 der Zahnradmaschine 3 die Kurbelwelle einer Hubkolben-Brennkraftmaschine 2, wobei die Zahnradmaschine 3 für den Antrieb zweier obenliegend angeordneter, eng benachbarter Nockenwellen 13, 14 vorgesehen ist. Mittels der erfindungsgemäß untersetzenden Zahnradmaschine 3 und dem entsprechend in der Teiluntersetzung angepaßten Getrieberad 5 ergeben sich für die Nockenwellen 13 und 14 überdeckungsfreie Antriebsräder 15 und 15'. Die strichliert gezeichneten Antriebsräder 16 und 16' der Nockenwellen 13 und 14 ergeben bei üblicher Antriebsauslegung eine unerwünschte Überdeckung.

Der erfindungsgemäße Aggregateantrieb 1 ist weiter an einer Brennkraftmaschine auch für andere Hilfs- und Nebenaggregate wie beispielsweise einer Einspritzpumpe verwendbar, wobei die Zahnradmaschine zugleich als Pumpe dienen kann.

## Patentansprüche

1. Aggregateantrieb mit einer innenachsigen Zahnradmaschine als Untersetzungsgetriebe, insbesondere bei Brennkraftmaschinen,
- umfassend eine mehrstufige Zahnradmaschine (3) mit einem zur Drehachse (8) einer Antriebswelle (7) eines Innenrotors (8) koaxialen Außenrotor (4), der
- mit dem Innenrotor (8) über einen Zwischenrotor (12) in Antriebsverbindung steht,
**dadurch gekennzeichnet,**
- **dass** der Außenrotor (4) an einer freien Stimseite (9) mit einem wellennahen Kragen (10) ausgebildet ist als Träger eines mit einem relativ kleinstmöglichen Teilkreis-Durchmesser ausgelegten Getrieberades (5), und dass
- eine im Kragen (10) angeordnete Lagereinrichtung (11, 11') einer Zentrierung von Außenroton: (4) und Getrieberad (5) auf der Antriebswelle (7) dient, wobei
- die zweistufige Zahnradmaschine (3) mit ihren Rotoren (8, 12, 4) eine erste Teiluntersetzung aufweist und
- das Getrieberad (5) mit dem weiteren Aggregateantrieb (1) eine zweite Teiluntersetzung bildet derart, dass
- die Teiluntersetzüngen eine Gesamtuntersetzung i_{ges} = 0,5 bzw.1:2 ergeben.

2. Aggregateantrieb nach Anspruch 1, **dadurch gekennzeichnet,**
- **dass** die zweistufige Zahnradmaschine (3) mit einem innen wie außen jeweils sieben Zähne aufweisenden Zwischenrotor (12) ausgebildet ist, der
- einerseits mit einem sechs Zähne aufweisenden Innenrotor (8) und andererseits mit einem acht Zähne aufweisenden Außenrotor (4) für eine Teiluntersetzung von i = 0,75 bzw. 3/4 zusammenwirkt.

3. Aggregateantrieb nach Anspruch 1 und 2, **dadurch gekennzeichnet,**
- **dass** mit dem Getrieberad (5) im weiteren Aggregateantrieb (1) eine Teiluntersetzung von i = 2/3 gewählt ist, die
- mit der Teiluntersetzung i = 3/4 der Zahnradmaschine (3) eine Gesamtuntersetzung i_{ges} = 0,5 bzw. 1:2 ergibt.

4. Aggregateantrieb nach Anspruch 1, **dadurch gekennzeichnet,**
- **dass** eine zweistufige Zahnradmaschine vorgesehen ist mit einem innen wie außen jeweils sieben Zähne aufweisenden Zwischenrotor, der
- einerseits mit einem sechs Zähne aufweisenden Innenrotor und andererseits mit einem zwölf Zähne aufweisenden Außenrotor für eine Teiluntersetzung von i = 0,5 zusammenwirkt, wobei
- die mit dem Getrieberad (5) gewählte Teiluntersetzung i = 1 sein kann für ein i_{ges} = 0,5 bzw. 1:2.

5. Aggregateantrieb nach einem oder mehreren der Ansprüche 1 bis 4, **dadurch gekennzeichnet,**
- **dass** als Antriebswelle (7) des Innenrotors (8) der Zahnradmaschine (3) eine Kurbelwelle der Brennkraftmaschine (2) dient, wobei
- die Zahnradmaschine (3) für den Antrieb zweier obenliegend angeordneter Nockenwellen (13, 14) vorgesehen ist.

6. Aggregateantrieb nach einem oder mehreren der Ansprüche 1 bis 4, **dadurch gekennzeichnet, dass** die Zahnradmaschine (3) zum Antrieb weiterer Hilfs- und Neben-Aggregate der Brennkraftmaschine (2), insbesondere einer Einspritzpumpe, dient.

## Claims

1. A unit drive comprising a reduction gear in the form of an inner-axle geared machine, especially in internal combustion engines,
- comprising a multi-stage geared machine (3) with an outer rotor (4) coaxial with the axis (6) of a driving shaft (7) of an inner rotor (8), the outer rotor
- being connected for drive purposes to the inner rotor (8) via an intermediate rotor (12),
**characterised in that**
- a free end face (9) of the outer rotor (4) is formed near the shaft with a collar (10) for holding a gearwheel (5) designed with a relatively smallest possible pitch circle diameter, and
- a bearing device (11, 11') disposed in the collar (10) is for centring the outer rotor (4) and the gearwheel (5) on the drive shaft (7), wherein
- the rotors (8, 12, 4) of the two-stage geared machine (3) make a first partial reduction gear and
- the gearwheel (5) and the rest of the unit drive (1) form a second partial reduction gear such that
- the partial reductions make up a total reduction I_{ges} = 0.5 or 1:2.

2. A unit drive according to claim 1, **characterised in that**
- the two-stage geared machine (3) comprises an intermediate rotor (12) having seven inner and seven outer teeth, and
- co-operating on one side with a six-tooth inner rotor (8) and on the other side with an eight-tooth outer rotor (4) to obtain a partial gear reduction of i = 0.75 or 3/4.

3. A unit drive according to claims 1 and 2, **characterised in that**
- the partial reduction via the gearwheel (5) in the rest of the drive unit (1) is chosen at i = 2/3, which
- together with the partial reduction i = 3/4 of the geared machine (3) makes up a total reduction i_{ges} = 0.5 or 1:2.

4. A unit drive according to claim 1, **characterised in that**
- a two-stage geared machine is provided with an intermediate rotor having seven inner and seven outer teeth and
- co-operating on one side with a six-tooth inner rotor and on the other side with a twelve-tooth outer rotor to obtain a partial reduction of i = 0.5, wherein
- the partial reduction via the gearwheel (5) can be chosen at i = 1 to obtain an i_{ges} = 0.5 or 1:2.

5. A unit drive according to one or more of claims 1 to 4, **characterised in that**
- the drive shaft (7) of the inner rotor (8) of the geared machine (3) serves as a crankshaft of the internal combustion engine (2), wherein
- the geared machine (3) is adapted to drive two high-level camshafts (3, 14).

6. A unit drive according to one or more of claims 1 to 4, **characterised in that** the geared machine (3) is for driving additional auxiliary and secondary units of the engine (2), especially an injection pump.

## Revendications

1. Unité d'entraînement comprenant une machine à pignons dentés d'axe intérieur comme réducteur notamment applicable à des moteurs à combustion interne, comprenant
- une machine à pignons dentés (3) à plusieurs étages avec un rotor extérieur (4) coaxial à l'axe de rotation (6) de l'arbre d'entraînement (7) d'un rotor intérieur (8),
- le rotor extérieur étant en liaison d'entraînement avec le rotor intérieur (8) par l'intermédiaire d'un rotor intermédiaire (12),
**caractérisée en ce que**
- une face frontale libre (9) du rotor extérieur (4) comporte une collerette (10) proche de l'arbre et servant de support à une roue de transmission (5) dont le diamètre du cercle primitif est relativement aussi petit que possible,
- un palier (11, 11') installé dans la collerette (10) assure le centrage du rotor extérieur (4) et de la roue de transmission (5) sur l'arbre d'entraînement (7),
- la machine à pignons dentés (3) à deux étages avec ses rotors (8, 12, 4) présente un premier rapport de réduction, et
- la roue de transmission (5) forme avec l'autre unité d'entraînement (1) un second rapport de réduction de sorte que
- les réductions partielles donnent une réduction globale i_{g} = 0,5 = 1/2.

2. Unité d'entraînement selon la revendication 1,
**caractérisée en ce que**
- la machine à pignons dentés (3) à deux étages comporte un rotor intermédiaire (12) ayant extérieurement et intérieurement 7 dents,
- le rotor intermédiaire coopère d'une part avec un rotor intérieur (8) à 6 dents et d'autre part avec un rotor extérieur (4) à 8 dents donnant un rapport de réduction i = 0,75 = 3/4.

3. Unité d'entraînement selon les revendications 1 et 2,
**caractérisée en ce que**
- avec la roue de transmission (5) dans l'autre unité d'entraînement (1) on choisit un rapport de division i = 2/3,
- ce rapport donne avec le rapport de division i = 3/4 de la machine à pignons dentés (3), un rapport global i_{g} = 0,5 = 1/2.

4. Unité d'entraînement selon la revendication 1,
**caractérisée en ce que**
- elle comporte une machine à pignons dentés à deux niveaux avec un rotor intermédiaire ayant extérieurement et intérieurement chaque fois 7 dents,
- ce rotor coopère d'une part avec un rotor intérieur à 6 dents et d'autre part avec un rotor extérieur à 12 dents pour avoir un rapport de réduction i = 0,5 et
- la roue de transmission (5) peut avoir un rapport de division i = 1 de sorte que l'on a un rapport de réduction global i_{g} = 0,5 = 1/2.

5. Unité d'entraînement selon l'une ou plusieurs des revendications 1 à 4,
**caractérisée en ce que**
- l'arbre d'entraînement (7) du rotor intérieur (8) de la machine à pignons dentés (3) est le vilebrequin du moteur à combustion interne (2) et
- la machine à pignons dentés (3) est prévue pour entraîner deux arbres à cames en tête (13, 14).

6. Unité d'entraînement selon l'une ou plusieurs des revendications 1 à 4,
**caractérisée en ce que**
la machine à pignons dentés (3) est prévue pour l'entraînement d'autres équipements auxiliaires et accessoires d'un moteur à combustion interne (2), notamment d'une pompe d'injection.
